# EUROPEAN PATENT SPECIFICATION

(11) **EP 1 526 952 B1**
(45) Date of publication and mention of the grant of the patent: **07.11.2007**
(21) Application number: 03764270.9
(22) Date of filing: 04.07.2003
(51) Int. Cl.: B25J 19/00, B25J 9/10

(54) **A DEVICE FOR AN INDUSTRIAL ROBOT**
VORRICHTUNG FÜR EINEN INDUSTRIEROBOTER
DISPOSITIF DE ROBOT INDUSTRIEL

(30) Priority: 11.07.2002 SE 0202176
(43) Date of publication of application: 04.05.2005
(73) Proprietor: ABB AB, 721 83 Västerås (SE)
(72) Inventor: HELDESJÖ, Magnus, S-72477 Västeras (SE); LUNDBÄCK, Daniel, S-72482 Västeras (SE)
(86) International application number: PCT/SE2003/001171
(87) International publication number: WO 2004/007151

(56) References cited:
- DE-A1- 3 721 274
- US-A- 5 839 322

## Description

### TECHNICAL FIELD AND BACKGROUND ART

The present invention relates to the field of devices for restricting the working range around an axis of an industrial robot in the form of restriction of the maximum angle for rotation of a first part of the robot relative to a second part connected to the first part, wherein the first part is provided with a stop and the second part is provided with a stop element adapted to hit against the stop, when rotating the first part relative to the second part, thus forming opposite end positions for this rotation. The industrial robot may be of any type.

An industrial robot is usually programmed to operate within a certain working range. For safety reasons, it is furthermore often prescribed that the working range for certain axes of the robot shall be restricted, from the hardware point of view, by means of mechanical or electric stop means. In this way, an emergency stop of the robot is released if the robot, due to a fault in the control system, should attempt to move outside the programmed working range.

Devices of this kind for achieving such a restriction of the movement are known from, for example, EP-A-0 241 556 and SE-A-469 878. A device according to the preamble of claim 1 is kown by US-A-3-954 188. Furthermore a device of the kind described in the introductory part of the description is known, said device comprising a set of stop elements and means for fixing a varying number of the stop elements on the first part in a row one after the other and adjacent to each other along a circular arc around the axis of rotation of the first part in order to hit against the stop with those end surfaces of the stop elements which are located at opposite ends of the row, when rotating the first part relative to the second part, thus forming opposite end positions for this rotation.

By providing such a set of stop elements, which are formed from blocks having essentially the shape of truncated sectors of a circle, different numbers or combinations of such blocks may be arranged one after the other on said row to cover angles of rotation, of various magnitudes, around said axis in dependence on the current requirements. However, the means for fixing these blocks to the first part, for example a robot arm or a robot foot, which may be in the form of bolts, are subjected to very considerable loads when the first stop element, viewed in the direction of movement, is at some time run against the fixed stop. For this reason, various measures must be taken to prevent said means from bursting or becoming deformed. One possibility is to try to reinforce the bolts or to apply extra support for the stop elements in a radial direction, since the tangential force transmitted from the fixed stop to said first stop element will give rise to considerable radial forces on the means for fixing, such as the bolts further downstream in the row. At the same time, after 90° from the impact end surface of the row of stop elements, the tangential force will be almost zero and substantially no force be transmitted to stop elements appearing downstream in the row. This means that the first bolts must take up all the force. It is both complicated and costly to arrive at such solutions to the problem of transmitting the impact forces to the fixing means of the stop elements.

### SUMMARY OF THE INVENTION

The object of the present invention is to provide a device of the kind which is defined in the preamble to the appended claim 1 and which provides a far-reaching solution to the problem, discussed above, arising in such prior art devices.

This object is achieved according to the invention by the features of claim 1.

Since the stop elements in this way act as if they were one single stop element, the force transmitted to them via the stop may be taken up by considerably more fixing means, for example screws, than if the stop elements should act as individual parts. Thus, the tangential force arising upon impact of the front stop element in the row against the stop will be capable of being transmitted from one stop element to another stop element and hence, to the greatest possible extent, the force be transmitted to the body of the first part that the stop elements are fixed to. This implies that the fixing means are spared great shear stresses in a radial direction, so that they do not have to be oversized or be reinforced by radial supports for the stop elements.

According to a preferred embodiment of the invention, said connection members are arranged, when forming said row, to bring about mechanical interlocking between adjacent stop elements. This makes possible a simple mounting of the stop elements in situ while at the same time achieving a reliable and effective locking of the elements so as to act, with respect to the force transmitted via the stop, as one single element. This also makes it possible to use simple and inexpensive manufacturing processes both for the stop elements and the surface on which they are intended to be screwed to the first part.

According to another preferred embodiment of the invention, the connection members comprise tooth-shaped projections on those surfaces of the stop elements which are essentially tangentially directed when a row has been formed, and recesses corresponding thereto in corresponding surfaces on adjacent stop elements. This constitutes a very simple and efficient way of forming said interlocking. In addition, the assembly is very simple in that adjacent stop elements may be pushed in an essentially tangential direction with the teeth and recesses into each other before being fixed to the first part.

According to a further preferred embodiment of the invention, when a row has been formed, the connection members comprise, at the essentially tangentially directed ends of the stop elements, essentially axially extending grooves or recesses and projections which fit therein and which are adapted to be axially inserted into these. The projections may have the shape of a dovetail or any other shape. Also this embodiment exhibits the advantages mentioned for the preceding embodiment.

The invention also relates to a method for achieving a restriction of the working range around an axis of an industrial robot according to the appended method claims.

Additional advantages, and advantageous features, of the invention will be clear from the following description and the other dependent claims.

### BRIEF DESCRIPTION OF THE DRAWINGS

Preferred exemplary embodiments of the invention will now be described with reference to the accompanying drawings, wherein
- Figure 1: shows a side view of an industrial robot, around the different axes of rotation of which the working range may be restricted by a device according to the invention,
- Figure 2: is a perspective view of part of an industrial robot with a device according to a preferred embodiment of the invention applied to a joint between two arms of the robot,
- Figure 3: is a partially cut-away view of a joint of an industrial robot provided with a device according to the invention,
- Figure 4: is a detailed view of a stop element of a device according to a preferred embodiment of the invention, and
- Figure 5: is a detailed view of a stop element of a device according to another preferred embodiment of the invention.

### DETAILED DESCRIPTION OF PREFERRED EMBODIMENTS OF THE INVENTION

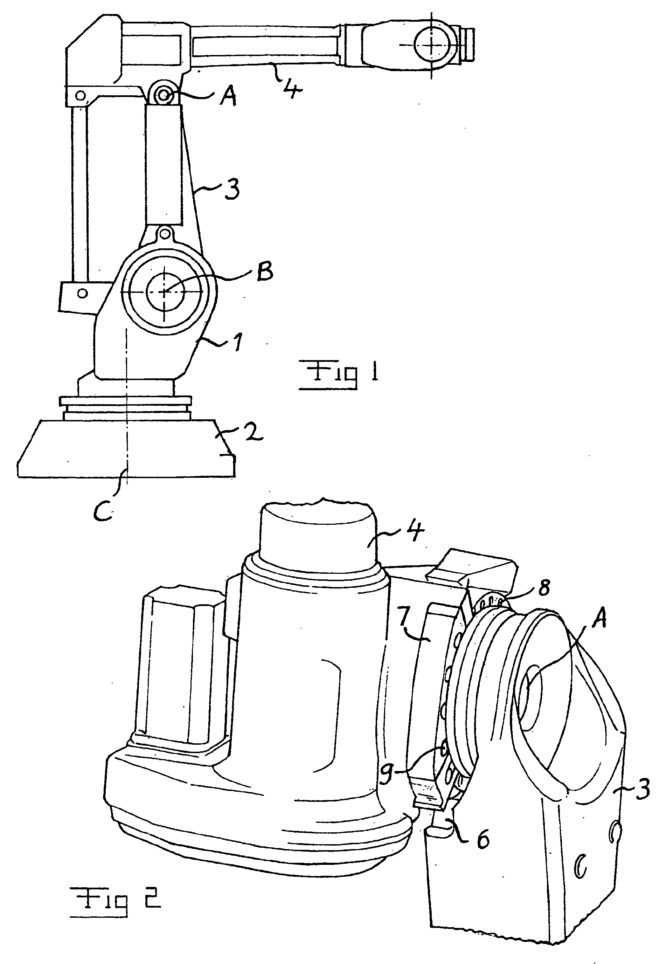

Figure 1 shows one possible type of industrial robot, to which a device for restriction of the working range according to the invention may be applied. The robot has a stand 1 which is rotatably journalled, around a vertical axis C, in a robot foot 2 secured to a mounting base. A first robot arm 3 is pivotally journalled at the stand 1 around an axis B. At the upper end of the arm 3, a second robot arm 4 is pivotally journalled around an axis A.

The working ranges of the axes A, B and C are restricted, for safety reasons, with the aid of mechanical or electrical stop means, such as a mechanical stop means of the kind to which the present invention relates and which will be described hereinafter while at the same time referring to Figures 2 and 3.

Figure 2 illustrates how a device according to the invention is arranged for restricting the working range in the form of the maximum angle for rotation of an upper robot arm 4 relative to a lower robot arm 3 around an axis A. Two fixed stops 5, 6 with essentially tangentially directed stop surfaces, relative to the axis of rotation A, are arranged on the lower robot arm 3. The stops 5, 6 preferably consist of lugs formed when casting the body of the arm 3.

The device further comprises a set of stop elements 7, 7', 7" in the form of blocks essentially shaped as truncated sectors of a circle, which are arranged to be placed in a row one after the other and making contact with one another on the upper arm 4, or a part secured thereto, along a circular arc around the axis of rotation A. The arm 4 exhibits first holes 8, distributed around the axis A, and the stop elements exhibit second holes 9 for inserting bolts 14, screws, or the like, for fixing the stop elements relative to the arm 4. In this way, upon rotation of the arm 4 around the axis A, the stop elements will hit against the stops 5 and 6, respectively, with end surfaces located at opposite ends of the rows, thus forming opposite end positions for the rotation. The set of stop elements may be combined in an arbitrary manner and be fixed by means of the fixing means (the screws) at different desired locations around the axis A, to define different desired end positions of the working range of the industrial robot around the axis A. For this sake, the stop elements may, for example, exhibit a few, possibly only one, stop element adapted to extend through a relatively large angle along said circular arc, for example through 60°, preferably between 65° and 90°, whereas it may contain considerably more small stop elements with a corresponding angle of between 10° and 40°, preferably between 15° and 30°. This may be advantageous in those cases where, for example, said row shall alternately cover an angle interval of between 100° and 150°, since a "large stop element" in this case may be combined with, for example, 1-4 "small stop elements". It is, of course, fully possible for the set also to contain stop elements of an intermediate size.

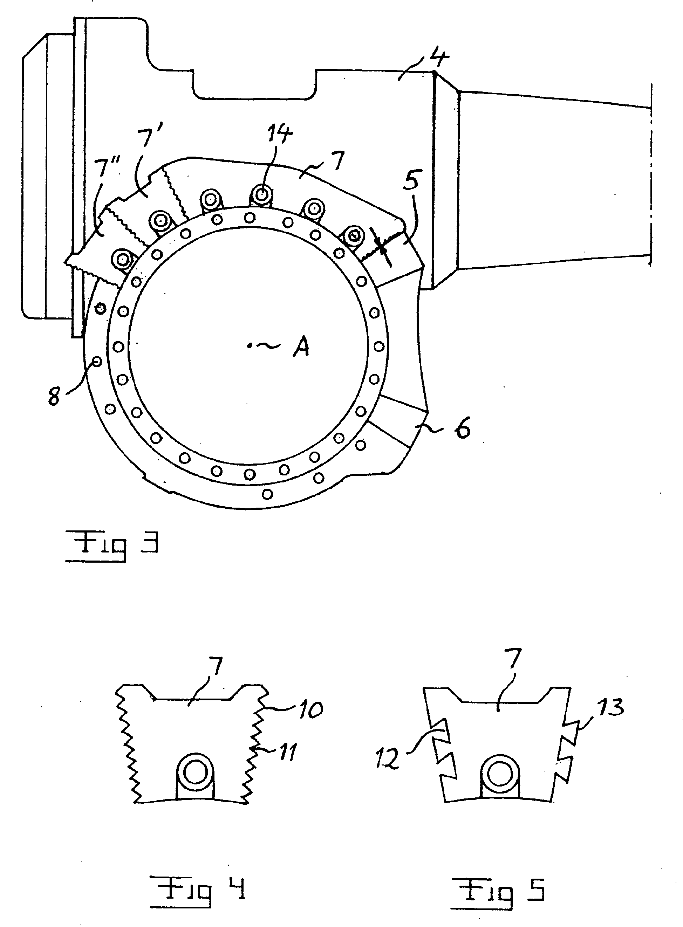

In the device according to the invention, members are provided for mutually connecting stop elements arranged adjacent to each other in said row so that these elements, with respect to transmission of forces between them and the stops 5, 6, when hitting against the stops upon rotation, behave essentially as if they together were one single coherent stop element. In the preferred embodiments shown, the connecting members are arranged on the stop elements themselves to bring about mechanical interlocking between adjacent stop elements, and in the embodiment illustrated in Figures 3 and 4 this is achieved by arranging tooth-like projections 10 on the essentially tangentially directed surfaces of the stop elements, when a row has been formed, and by forming recesses 11, corresponding thereto, on corresponding surfaces of adjacent stop elements. The teeth 10 and the recesses 11 are preferably elongated in the form of ridges and valleys, which ensures a very good interlock and transmission of forces therebetween, and it is especially preferred that they have an axial longitudinal extension in the position of the stop element around the axis. To obtain an optimum transmission of forces between the stop elements, a tooth on one side of a stop element is preferably followed by a tooth in an exactly corresponding position of the stop element on the opposite side of this stop element.

Figure 5 illustrates how the stop elements may exhibit different members for mutual mechanical interlocking, and here the tangentially directed ends of the stop elements are provided with essentially axially extending grooves 12 and projections 13 fitting therein and adapted to be inserted axially into these. In this case, the grooves and the projections exhibit a dovetail-shaped cross section, but other cross-section shapes are also feasible. The important thing is that the connecting members counteract relative motion of adjacent stop elements in a radial direction, so that when applying an essentially tangentially directed force to the front surface of a stop element, as viewed in the direction of movement, when hitting against a stop, this force may be forwarded from that stop element to the next as if this in practice constituted one coherent portion of the first stop element. This will mean that the stop elements, with respect to the transmission of this force generated upon impact against the stop, will act as if they were one single stop element and thereby the force be distributed and taken up by considerably more fixing means 14 than in the absence of the interlock. Thus, the connecting members could also be formed from essentially tangentially directed fingers and corresponding recesses in the end surfaces of the respective stop element for insertion thereinto in an essentially tangential direction, such as for the teeth in the embodiment shown in Figure 4. The stop element blocks are advantageously made from extruded aluminium, which provides good possibilities of creating a complex two-dimensional geometry with good possibilities for tolerance.

The invention is not, of course, in any way limited to the preferred embodiments described above, but numerous possibilities of modifications thereof should be obvious to a person skilled in the art without this person for that reason deviating from the basic concept of the invention as described in the appended claims.

For example, connecting members other than those shown and/or discussed above are possible, and it is within the scope of the invention, for example, to connect adjacently positioned stop elements to one another in other ways, so that they behave in this respect as if they were one single coherent stop element, than by mutual interlocking, such as by means of members which are completely separate from the stop elements and which are applied at the transition between adjacent stop elements, for example yoke-like elements with branches that are inserted into recesses in the respective stop elements or the like. However, interlocking seems to be preferable in most applications because of its simplicity and great reliability. Thus, the expression that the stop elements are intended, with respect to the transmission of forces between them, to behave as one single coherent stop element, embraces all types of mutual connection between them which results in this behaviour but which allows subsequent detachment to enable the set of stop elements to be optionally combined again. Consequently, permanent gluing of the stop elements is not included.

From the reasoning above it should be clear that the claims are also intended to cover the case where it is not one and the same stop (although it may be) that the opposite end surfaces of the row of stop elements are intended to hit against when reaching the respective limit to the working range.

It is also fully possible that, in practice, only one end surface of the row of stop elements has any possibility to reach and hit against the fixed stop, and that the second limit to the working range, which is defined by the stop elements, can never be reached since the opposite end surface of the row of stop elements hits against a stop because other restrictions of the movement are inherent in the device. The definition in the claim, "in order to hit against the stop with those end surfaces of the stop elements which are located at opposite ends of the row, when rotating the first part relative to the second part, thus forming opposite end positions for this rotation", should also be interpreted to cover such a case.

The teeth could be shaped like pyramids or cones or differ from ridges in some other way by interruptions, and the recesses could be modified in a corresponding way.

In the example shown, of course, the fixed stops could just as well be arranged on the upper arm and the stop elements on the lower arm.

Damper layers, for example of rubber, absorbing kinetic energy may be arranged on the surface of the stop and designed to be hit by the "foremost" stop element in the row and/or on the front surface of this stop element, as viewed in the direction of movement, and this is intended to be covered by the definition in the claim that the stop element hits against the stop.

## Claims

1. A device for restricting the working range around an axis of an industrial in the form of restriction of the maximum angle for rotation of the first part (4) of the robot relative to a second part (3) thereof, connected to the first part, wherein the robot comprises a fixed stop (5, 6) arranged at the second part, wherein the device comprises a set of stop elements (7, 7', 7") **characterized in that** it further comprises means (8, 9, 14) for fixing an optional number of stop elements on the first part (4) in a row one after the other and making contact with one another along a circular arc around the axis of rotation of the first part, in order to hit against the stop with those end surfaces of the stop elements which are located on opposite ends of the row, when rotating the first part relative to the second part, thus forming opposite end positions for this rotation, wherein the device comprises members (10-13) for such a mutual connection of stop elements (7, 7', 7") arranged adjacent to each other in said row that these elements, with respect to the transmission of forces between them and the stop (5, 6), when hitting against the latter upon said rotation, essentially behave as if they together were one single coherent stop element.

2. A device according to claim 1, **characterized in that** said connecting members (10-13) are adapted, when forming said row, to achieve mechanical interlocking between adjacent stop elements (7, 7', 7").

3. A device according to claim 2, **characterized in that** said connecting members comprise tooth-like projections (10) on the essentially tangentially directed surfaces of the stop elements, when a row has been formed, and recesses (11) corresponding thereto on corresponding surfaces of adjacent stop elements.

4. A device according to claim 2, **characterized in that** the connecting members comprise, at the essentially tangentially directed ends of the stop elements, when a row has been formed, essentially axially extending grooves or recesses (12) and projections (13) fitting therein and adapted to be inserted into these.

5. A device according to any of the preceding claims, **characterized in that** said fixing means comprise first holes (8) distributed around the axis of rotation of the arm in said first part and second holes (9) arranged in the stop elements (7, 7', 7"), as well as elongated rod-shaped pieces (14) which are each adapted to be inserted through a first and a second hole for fixing the respective stop element to the first part.

6. A device according to claim 5, **characterized in that** said pieces are bolts (14) designed for screwing the stop elements (7, 7', 7") to said first part.

7. A device according to any of the preceding claims, **characterized in that** said set of stop elements (7, 7', 7") comprises stop elements of mutually considerably different lengths with respect to the angle through which they are intended to extend along said circular arc.

8. A device according to claim 7, **characterized in that** said set includes 1-3 first stop elements (7) with a considerably larger said angle than the other stop elements (7', 7") which are larger in number than the first ones.

9. A device according to claim 8, **characterized in that** said set includes at least one first stop element (7) with a said angle exceeding 60°, preferably between 65° and 90°.

10. A device according to claim 8 or 9, **characterized in that** said set includes several, preferably 3-6, other stop element (7, 7', 7") with a said angle between 10° and 40°, preferably 15° and 30°.

11. A device according to any of the preceding claims, **characterized in that** the stop elements (7, 7', 7") are formed from blocks having essentially the shape of truncated sectors of a circle.

12. A device according to any of the preceding claims, **characterized in that** said means (8, 9, 14) are adapted to fix the stop elements to an arm of an industrial robot.

13. A device according to any of the preceding claims, **characterized in that** it is designed for application to a rotary joint (A) between first and second parts in the form of two arms (3, 4) of an industrial robot.

14. A device according to any of claims 1-11, **characterized in that** it is designed for application to a rotary joint (C) in the form of a stand (1) and a robot foot (2) of an industrial robot.

15. A method for providing a restriction of the working range around an axis of an industrial in the form of restriction of the maximum angle for rotation of a first part (4) of the robot relative to a second part (3) thereof, connected to the first part, wherein the robot comprises a fixed stop (5, 6) arranged at the second part, **characterized in that** an optional number of a set of stop elements (7, 7', 7") are fixed to the first first part (4) in a row one after the other and make contact with one another along a circular arc around the axis of rotation of the first part, in order to hit against the stop with those end surfaces of the stop elements which are located at opposite ends of the row, when rotating the first part relative to the second part, thus forming opposite end positions for this rotation, the stop elements (7, 7', 7") located adjacent to each other in said row are mutually connected to one another in such a way that these stop elements, with respect to the transmission of forces between them and the stop (5, 6), when hitting against the latter upon said rotation, essentially behave as if they together were one single coherent stop element.

16. A method according to claim 15, **characterized in that** adjacently located stop elements are mutually connected to one another by joining them together to achieve mechanical interlocking thereof to one another.

## Patentansprüche

1. Vorrichtung zum Beschränken des Arbeitsbereichs um eine Achse eines Industrieroboters in Form einer Beschränkung des maximalen Winkels für die Rotation des ersten Teils (4) des Roboters, relativ zu einem zweiten Teil (3) davon, verbunden mit dem ersten Teil, wobei der Roboter ein fixiertes Anschlagsstück (5,6) aufweist, welches an dem zweiten Teil angeordnet ist, wobei die Vorrichtung eine Gruppe von Anschlagsstückelementen (7, 7', 7") aufweist, **dadurch gekennzeichnet, dass** sie weiter Mittel (8, 9, 14) aufweist, um eine optionale Anzahl von Anschlagsstückelementen auf dem ersten Teil (4) in einer Reihe nacheinander zu fixieren und sie, entlang eines Kreisbogens um die Rotationsachse des ersten Teils miteinander in Kontakt zu bringen, um gegen das Anschlagsstück mit diesen Endflächen der Anschlagsstückelemente zu treffen, die auf gegenüberliegenden Enden der Reihe angeordnet sind, wenn sich der erste Teil relativ zu dem zweiten Teil dreht, wodurch sich folglich gegenüberliegende Endstellungen für diese Drehung bilden, wobei die Vorrichtung weiter Elemente (10-13) für eine solche wechselseitige Verbindung der Anschlagsstückelemente (7, 7', 7") umfasst, welche benachbart zueinander in der Reihe angeordnet sind, dass diese Elemente, bezüglich der Übertragung von Kräften zwischen ihnen und dem Anschlagsstück (5, 6), wenn sie bei Drehung gegen die letzteren treffen, sich im wesentlichen so verhalten, als wären sie zusammen ein einzelnes kohärentes Anschlagstückelement.

2. Vorrichtung gemäß Anspruch 1, **dadurch gekennzeichnet, dass** die Verbindungselemente (10-13), wenn sie die Reihe bilden, angepasst sind, um eine mechanische Verzahnung zwischen benachbarten Anschlagstückelementen (7, 7', 7") zu erzielen.

3. Vorrichtung gemäß Anspruch 2, **dadurch gekennzeichnet, dass** die Verbindungselemente zahnähnliche Überstände (10), auf den im Wesentlichen tangential ausgerichteten Oberflächen der Anschlagsstückelemente, wenn eine Reihe gebildet wurde, und Aussparungen (11) umfassen, die dem an entsprechenden Oberflächen der benachbarten Anschlagsstückelemente entsprechen.

4. Vorrichtung gemäß Anspruch 2, **dadurch gekennzeichnet, dass** die Verbindungselemente an den im Wesentlichen tangential gerichteten Enden der Anschlagsstückelemente, wenn eine Reihe gebildet worden ist, im Wesentlichen sich axial erstreckende Kerben oder Aussparungen bzw. Vertiefungen (12) und Überstände (13) aufweisen, die darin passen und angepasst sind, in diese eingesetzt zu werden.

5. Vorrichtung gemäß irgendeinem der vorhergehenden Ansprüche, **dadurch gekennzeichnet, dass** das Befestigungsmittel erste Löcher (8) umfasst, die um die Rotationsachse des Arms in dem ersten Teil verteilt sind und zweite Löcher (9), die in den Anschlagstückelementen (7, 7', 7") angeordnet sind, sowie verlängerte stabförmige Stücke (14), die jeweils angepasst sind, um durch ein erstes und ein zweites Loch zum Befestigen der entsprechenden Anschlagsstückelemente in den ersten Teil eingesetzt zu werden.

6. Vorrichtung gemäß Anspruch 5, **dadurch gekennzeichnet, dass** die Stücke Schrauben (14) sind, die für das Verschrauben der Anschlagsstückelemente (7, 7', 7") an das erste Teil bestimmt sind.

7. Vorrichtung gemäß irgendeinem der vorhergehenden Ansprüche, **dadurch gekennzeichnet, dass** die Gruppe von Anschlagsstückelementen (7, 7', 7") Anschlagsstückelemente von gegenseitig beträchtlich verschiedenen Längen umfaßt, und zwar mit Bezug auf den Winkel, durch den sie sich entlang des Kreisbogens erstrecken sollen.

8. Vorrichtung gemäß Anspruch 7, **dadurch gekennzeichnet, dass** die Gruppe 1-3 erste Anschlagsstückelemente (7) mit einem erheblich größeren Winkel einschließt, als die anderen Anschlagsstückelemente (7', 7"), welche in der Anzahl größer sind als die ersten.

9. Vorrichtung gemäß Anspruch 8, **dadurch gekennzeichnet, dass** die Gruppe mindestens ein erstes Anschlagsstückelement (7) mit einem Winkel aufweist, der 60° überschreitet, vorzugsweise aber zwischen 65° und 90° liegt.

10. Vorrichtung gemäß Anspruch 8 oder 9, **dadurch gekennzeichnet, dass** die Gruppe mehrere, vorzugsweise 3-6 andere Anschlagsstückelemente (7, 7', 7"), mit einem Winkel zwischen 10° und 40°, vorzugsweise aber zwischen 15° und 30° einschließt.

11. Vorrichtung gemäß irgendeinem der vorhergehenden Ansprüche, **dadurch gekennzeichnet, dass** die Anschlagsstückelemente (7, 7', 7") aus Blöcken gebildet sind, welche im Wesentlichen die Form von abgeschnittenen Sektoren eines Kreises aufweisen.

12. Vorrichtung gemäß irgendeinem der vorhergehenden Ansprüche, **dadurch gekennzeichnet, dass** die Mittel (8, 9, 14) angepasst sind, um die Anschlagsstückelemente an einem Arm eines Industrieroboters zu fixieren.

13. Vorrichtung gemäß irgendeinem der vorhergehenden Ansprüche, **dadurch gekennzeichnet, dass** sie zur Anwendung auf ein Drehgelenk (A) zwischen ersten und zweiten Teilen, in der Form von zwei Armen (3, 4) eines Industrieroboters bestimmt ist.

14. Vorrichtung gemäß irgendeinem der Ansprüche 1-11, **dadurch gekennzeichnet, dass** sie zur Anwendung auf ein Drehgelenk (C) in der Form eines Standes (1) und eines Roboterfußes (2) eines Industrieroboters, ausgelegt ist.

15. Verfahren zum Bereitstellen einer Beschränkung des Arbeitsbereichs um die Achse eines Industrieroboters, in der Form der Beschränkung des maximalen Winkels der Drehung eines ersten Teils (4) des Roboters, relativ zu einem zweiten Teil (3) davon, welcher mit dem ersten Teil verbunden ist, wobei der Roboter ein fixiertes Anschlagsstück (5, 6) aufweist, welches bei dem zweiten Teil angeordnet ist, **dadurch gekennzeichnet, dass** eine optionale Anzahl einer Gruppe von Anschlagsstückelementen (7, 7', 7") an dem ersten Teil (4) in einer Reihe nacheinander befestigt ist und miteinander entlang eines Kreisbogens um die Rotationsachse des ersten Teils Kontakt bildet, um gegen das Anschlagsstück mit den Endoberflächen der Anschlagsstückelemente zu treffen, die an gegenüberliegenden Enden der Reihe angeordnet sind, wenn der sich erste Teil relativ zu dem zweiten Teil dreht, wodurch sich folglich gegenüberliegende Endstellungen für diese Rotation bilden, wobei die Anschlagsstückelemente (7, 7', 7"), welche benachbart zueinander in der Reihe angeordnet sind, gegenseitig miteinander in einer solchen Art und Weise verbunden sind, dass diese Anschlagsstückelemente, bezüglich der Übertragung von Kräften zwischen ihnen und dem Anschlagsstück (5, 6), wenn sie bei Drehung gegen die letzteren treffen, sich im wesentlichen so verhalten als wären sie zusammen ein einzelnes kohärentes Anschlagstückelement.

16. Verfahren gemäß Anspruch 15, **dadurch gekennzeichnet, dass** benachbart angeordnete Anschlagsstückelemente gegenseitig miteinander **dadurch** verbunden werden, indem sie zusammengefügt werden, um eine gegenseitige Verzahnung von ihnen zu erreichen.

## Revendications

1. Dispositif pour limiter la distance de travail autour d'un axe d'un robot industriel, sous la forme d'une limitation de l'angle maximal pour la rotation de la première partie (4) du robot par rapport à une seconde partie (3) de celui-ci, connectée à la première partie, le robot comprenant une butée fixe (5, 6) disposée dans la deuxième partie, le dispositif comprenant un ensemble d'éléments d'arrêt (7, 7', 7"), **caractérisé en ce qu'**il comprend en outre des moyens (8, 9, 14) pour fixer un nombre optionnel d'éléments d'arrêt sur la première partie (4) sur un rang les uns après les autres et établir un contact des uns avec les autres sur un arc de cercle autour de l'axe de rotation de la première partie, afin de venir heurter la butée par les surfaces d'extrémités des éléments d'arrêt qui se trouvent aux extrémités opposées du rang, lors de la rotation de la première partie par rapport à la seconde partie, en créant ainsi des positions d'extrémités opposées pour cette rotation, le dispositif comprenant des éléments (10 -13) pour cet accouplement mutuel des éléments d'arrêt (7, 7', 7") disposés au voisinage immédiat les uns des autres sur ledit rang de façon que ces éléments, par rapport à la transmission de forces entre eux et la butée (5, 6), lorsqu'ils heurtent cette dernière au cours de ladite rotation, se comportent sensiblement comme s'ils constituaient les uns avec les autres un seul élément d'arrêt cohérent.

2. Dispositif selon la revendication 1, **caractérisé en ce que** lesdits éléments d'accouplement (10, 13) sont aptes, lorsqu'ils forment ledit rang, à réaliser un verrouillage mécanique entre les éléments d'arrêt adjacents (7, 7', 7").

3. Dispositif selon la revendication 2, **caractérisé en ce que** lesdits éléments d'accouplement comportent des saillies analogues à des dents (10) sur les surfaces à orientation sensiblement tangentielle des éléments d'arrêt, lorsqu'un rang a été formé, et des évidements (11) correspondant à celles-ci sur des surfaces correspondantes d'éléments d'arrêt adjacents.

4. Dispositif selon la revendication 2, **caractérisé en ce que** les éléments d'accouplement comportent, aux extrémités à orientation sensiblement tangentielle des éléments d'arrêt, lorsqu'un rang a été formé, des gorges ou évidements (12) s'étendant sensiblement axialement et des saillies (13) se logeant dans ceux-ci et aptes à être insérées dans ceux-ci.

5. Dispositif selon l'une quelconque des revendications précédentes, **caractérisé en ce que** lesdits moyens de fixation comportent des premiers trous (8) répartis autour de l'axe de rotation du bras dans ladite première partie et des seconds trous (9) disposés dans les éléments d'arrêt (7, 7', 7"), ainsi que des pièces allongées (14) en forme de tiges qui sont aptes chacune à être insérées à travers un premier et un second trous pour fixer les éléments d'arrêt respectifs à la première partie.

6. Dispositif selon la revendication 5, **caractérisé en ce que** lesdites pièces sont des boulons (14) conçus pour visser les éléments d'arrêt (7, 7', 7") sur ladite première partie.

7. Dispositif selon l'une quelconque des revendications précédentes, **caractérisé en ce que** ledit ensemble d'éléments d'arrêt (7, 7', 7") comporte des éléments d'arrêt de longueurs mutuellement très différentes par rapport à l'angle suivant lequel ils sont destinés à s'étendre sur ledit arc de cercle.

8. Dispositif selon la revendication 7, **caractérisé en ce que** ledit ensemble comprend un à trois premiers éléments d'arrêt (7) avec un angle précité beaucoup plus grand que celui des autres éléments d'arrêt (7, 7', 7") qui sont en nombre plus grand que les premiers.

9. Dispositif selon la revendication 8, **caractérisé en ce que** ledit ensemble comprend au moins un premier élément d'arrêt (7) avec un angle précité supérieur à 60°, de préférence de 65° à 90°.

10. Dispositif selon la revendication 8 ou 9, **caractérisé en ce que** ledit ensemble comprend plusieurs, de préférence 3 à 6, autres éléments d'arrêt (7, 7', 7") avec un angle précité de 10° à 40°, de préférence de 15° à 30°.

11. Dispositif selon l'une quelconque des revendications précédentes, **caractérisé en ce que** les éléments d'arrêt (7, 7', 7") sont constitués par des blocs ayant sensiblement la forme de secteurs tronqués d'un cercle.

12. Dispositif selon l'une quelconque des revendications précédentes, **caractérisé en ce que** lesdits moyens (8, 9, 14) sont aptes à fixer les éléments d'arrêt à un bras d'un robot industriel.

13. Dispositif selon l'une quelconque des revendications précédentes, **caractérisé en ce qu'**il est conçu pour servir avec un joint tournant (A) entre la première et la seconde parties sous la forme de deux bras (3, 4) d'un robot industriel.

14. Dispositif selon l'une quelconque des revendications 1 à 11, **caractérisé en ce qu'**il est conçu pour servir avec une articulation rotative (C) en forme de socle (1) et d'un pied (2) d'un robot industriel.

15. Procédé pour réaliser une limitation de la distance de travail autour d'un axe d'un robot industriel sous la forme d'une limitation de l'angle maximal de rotation d'une première partie (4) du robot par rapport à une seconde partie (3) de celui-ci, connectée à la première partie, le robot comprenant une butée fixe (5, 6) disposée dans la seconde partie, **caractérisé en ce qu'**un nombre optionnel d'un ensemble d'éléments d'arrêt (7, 7', 7") sont fixés à la première partie (4) sur un rang les uns après les autres et viennent au contact les uns des autres sur un arc de cercle autour de l'axe de rotation de la première partie, afin de heurter la butée par les surfaces d'extrémités des éléments d'arrêt qui se trouvent à des extrémités opposées du rang, lors de la rotation de la première partie par rapport à la seconde partie, en formant ainsi des positions d'extrémités opposées pour cette rotation, les éléments d'arrêt (7, 7', 7") situés au voisinage immédiat les uns des autres sur ledit rang sont accouplés les uns avec les autres de façon que ces éléments d'arrêt, par rapport à la transmission de forces entre eux et la butée (5, 6), lorsqu'ils heurtent cette dernière au moment de ladite rotation, se comportent sensiblement comme s'ils constituaient conjointement un seul élément d'arrêt cohérent.

16. Procédé selon la revendication 15, **caractérisé en ce que** des éléments d'arrêt adjacents les uns aux autres sont accouplés les uns avec les autres en réunissant ceux-ci pour créer un verrouillage mécanique mutuel de ceux-ci.
